# FASCICULE DE BREVET EUROPEEN

(11) **EP 2 647 780 B1**
(45) Date de publication et mention de la délivrance du brevet: **15.04.2020**
(21) Numéro de dépôt: 13305423.9
(22) Date de dépôt: 02.04.2013
(51) Int. Cl.: E04F 13/08, E04B 9/20, F16B 2/20, F16B 37/08

(54) **Dispositif de fixation de panneaux à distance d'une structure.**
Vorrichtung zum Befestigen von Platten mit einem gewissen Abstand von einer Struktur.
Device for attaching panels at a distance from a structure

(30) Priorité: 05.04.2012 FR 1253175
(43) Date de publication de la demande: 09.10.2013
(73) Titulaire: Ateliers LR Etanco, 78230 Le Pecq (FR)
(72) Inventeur: Leroy, Alain, 78820 JUZIERS (FR); Baguari, Abdelkrim, 78200 MANTES LA JOLIE (FR)
(74) Mandataire: Mazabraud, Xavier

(56) Documents cités:
- EP-A1- 0 666 444
- FR-A1- 2 874 040
- FR-A1- 2 878 876
- FR-A1- 2 914 967
- FR-A1- 2 930 006

## Description

La présente invention concerne un dispositif pour la fixation de panneaux à distance d'une structure support fixe pouvant consister en une paroi verticale (par exemple un mur ou une cloison) ou une paroi horizontale (par exemple un plafond).

Elle s'applique notamment, mais non exclusivement, à la réalisation d'un doublage de mur ou d'un faux plafond, par exemple en vue de son isolation thermique et/ou phonique.

D'une manière générale, on sait que pour ce type d'application, on utilise habituellement des éléments de liaison faisant intervenir une tige filetée ou crantée dont une première extrémité est destinée à être fixée à la structure fixe, tandis que la seconde extrémité coopère, en vue d'assurer une fixation ajustable, avec un cavalier conformé de manière à venir se clipser dans un élément profilé ou fourrure de section sensiblement en forme de C. Cet élément de profilé est prévu pour servir de support à un doublage ou parement.

Ce cavalier est fréquemment réalisé à partir d'une bande de tôle découpée et repliée de manière à obtenir une structure sensiblement en forme de U dont les ailes latérales présentent des extrémités incurvées et/ou obliques comprenant chacune une paire d'échancrures opposées dans lesquelles peuvent s'engager les bords longitudinaux de l'élément profilé.

Cet élément profilé comprend une âme plane sur laquelle viennent se fixer les panneaux de plafond ou de doublage. Lors de la pose, ils permettent de retenir une couche de matériau isolant servant à assurer une isolation thermique et/ou phonique entre les panneaux et la structure support. Le matériau isolant est embroché sur la tige filetée ou crantée par la seconde extrémité de la tige.

Il s'avère qu'en raison de la non planéité des structures support (murs ou plafonds) sur lesquelles on souhaite fixer les panneaux, il est nécessaire d'effectuer un réglage de la position du cavalier par rapport à la tige de manière à amener les âmes des profilés de support dans un même plan (horizontal ou vertical) qui constitue le plan de fixation des panneaux de doublage.

Pour effectuer un tel réglage, on a déjà proposé une solution consistant à doter le cavalier d'un manchon taraudé dans lequel la tige vient se visser. Le réglage de la position du cavalier s'obtient alors en faisant pivoter le cavalier de manière à réaliser une action de vissage ou de dévissage. Cette solution présente l'inconvénient de ne plus permettre de réglage lorsque le cavalier est clipsé dans le profilé de support.

Par le brevet FR 2 809 125, il a également été proposé un dispositif de liaison à pince faisant intervenir un cavalier présentant la forme d'un U couché dont les ailes latérales présentent d'un même côté un bord conformé de manière à venir se clipser sur un élément profilé. L'une des ailes comprend dans sa partie centrale une conformation en forme de bride dans laquelle peut passer la tige filetée, l'autre aile comprenant, quant à elle, une languette transversale comprenant un orifice par lequel passe la tige et destinée à exercer sur celle-ci un effort de cisaillement à la façon d'une guillotine. Cet effort de cisaillement est obtenu grâce aux propriétés de déformation élastique des ailes du cavalier. Cette solution, qui permet d'assurer un réglage du cavalier le long de la tige, s'avère incommode : pour effectuer le réglage, il est nécessaire de serrer les deux ailes du cavalier l'une vers l'autre et, en même temps, faire coulisser le cavalier le long de la tige. En outre, la qualité de la fixation est aléatoire en raison de l'imprécision du cavalier et des propriétés de déformation rémanente de la tôle.

Les documents FR 2 874 040, FR 2 914 967 et FR 2 930 006 décrivent aussi des dispositifs pour fixer des panneaux à distance d'une structure, mais leur usage n'est pas entièrement satisfaisant.

L'invention a donc plus particulièrement pour but de supprimer ces inconvénients. Elle propose, à cet effet, un dispositif de fixation plus simple permettant d'obtenir un verrouillage plus fiable et durable dans le temps même dans le cas où il a fait l'objet de plusieurs actionnements.

A cet effet, l'invention propose un dispositif pour la fixation de panneaux à distance d'une structure support fixe, ce dispositif comprenant :
- une tige crantée dont une première extrémité comporte des moyens de fixation au moins indirecte à ladite structure,
- un cavalier conformé de manière à venir se clipser sur un élément profilé de section sensiblement en forme de C, comportant un des moyens de guidages comprenant un canal à l'intérieur desquels la tige crantée peut coulisser,
   le dispositif comportant en outre des moyens de verrouillage/déverrouillage montés coulissants par rapport audit cavalier et présentant au moins une surface crantée disposée de manière à ce que ces moyens de verrouillage/déverrouillage puissent prendre au moins deux positions, une position déverrouillée dans laquelle l'au moins une surface crantée laisse le libre passage de la tige crantée dans le canal et une position verrouillée dans laquelle les crans de l'au moins une surface crantée des moyens de verrouillage/déverrouillage sont en prise avec les crans de la tige crantée, de façon à bloquer le passage de la tige crantée dans les moyens de guidage, les sections transversales de la tige crantée et du canal coopérant de façon à bloquer la tige en rotation dans le canal.

Ce dispositif comporte classiquement une tige crantée prévue pour se clipser sur un premier élément profilé ou fourrure et un cavalier prévu pour se clipser sur une seconde fourrure, les deux fourrures étant situées dans des plans différents sensiblement parallèles. Il se caractérise par des moyens de guidage rectilignes de la tige crantée à l'intérieur du cavalier, dans laquelle la tige peut coulisser, et par des moyens de verrouillage/déverrouillage de la tige crantée par rapport à ce cavalier, ces moyens de verrouillage/déverrouillage étant montés coulissants par rapport au cavalier. Ce dispositif ne fait donc pas intervenir de mouvement de rotation dans son fonctionnement.

Avantageusement, les moyens de verrouillage/déverrouillage peuvent comprendre un coulisseau mobile en translation sur le cavalier.

Ces moyens de verrouillage/déverrouillage peuvent prendre la forme d'un coulisseau ou tiroir monté coulissant sur une embase plane du cavalier. Ce coulisseau comporte au moins une surface crantée dont les crans sont destinés, en position verrouillée, à venir en prise avec les crans de la tige crantée, interdisant alors le coulissement de la tige filetée dans les moyens de guidage du cavalier. En position déverrouillée, les deux séries de crans sont écartées et la tige filetée est libre de coulisser linéairement à l'intérieur du cavalier.

Avantageusement, le coulisseau peut être monté coulissant par rapport au cavalier dans une direction orthogonale à celle du coulissement de la tige crantée dans les moyens de guidage.

Les deux mouvements de coulissement, de la tige filetée à l'intérieur du cavalier et du coulisseau par rapport au cavalier, sont donc orthogonaux.

Avantageusement, la tige crantée peut comporter deux surfaces crantées longitudinales disposées symétriquement par rapport à un axe longitudinal de la tige crantée.

Avantageusement, le coulisseau peut comporter deux surfaces crantées en regard l'une de l'autre.

La tige filetée et le coulisseau comportent chacun deux surfaces crantées, dont les crans respectifs sont destinés à venir en prise en position de verrouillage.

Avantageusement, les moyens de guidage peuvent comporter au moins une butée prévue pour limiter le mouvement de coulissement de ladite tige crantée dans les moyens de guidage.

Grâce à ces dispositions, une seconde extrémité de la tige crantée ne peut pas venir buter contre la face interne de l'âme de la fourrure sur laquelle le cavalier est clipsé.

Dans un premier mode d'exécution, le coulisseau peut comprendre des moyens de guidage et de maintien du cavalier.

Avantageusement, les moyens de guidage et de maintien et ledit cavalier peuvent comporter des butées qui coopèrent pour limiter en amplitude le mouvement de coulissement du coulisseau.

Grâce à ces dispositions, le coulisseau reste solitaire du cavalier, ce qui, en utilisation, présente l'avantage de limiter le nombre de pièces du dispositif à deux : la tige filetée et l'ensemble cavalier - coulisseau assemblés.

Dans un second mode d'exécution, le cavalier peut comprendre en outre une cheminée qui s'étend orthogonalement par rapport à l'embase plane et dans le prolongement des moyens de guidage, et à l'intérieur de laquelle la tige crantée peut coulisser.

Cette cheminée procure un meilleur maintien de la tige filetée, elle permet notamment de maintenir la tige même lorsqu'elle est entièrement sortie du canal du cavalier, et donc d'obtenir une plus grande latitude de réglage pour le dispositif.

Avantageusement, le cavalier peut comprendre sur l'embase plane des moyens de guidage et de maintien du coulisseau.

Dans ce mode d'exécution, les moyens de guidage et de maintien se trouvent sur l'embase du cavalier et non sur le cavalier lui-même.

Avantageusement, la cheminée peut comporter à son extrémité des rebords parallèles auxdits moyens de guidage et de maintien et formant glissières pour le coulisseau.

Grâce à cette disposition, le dispositif résiste mieux à un effort de traction exercé entre le cavalier et la tige filetée, lesdits rebords venant en appui sur des bords supérieurs du fourreau.

Des modes d'exécution de l'invention seront décrits ci-après, à titre d'exemples non limitatifs, avec référence aux dessins annexés dans lesquels :
La figure 1 est une vue en perspective d'un premier mode d'exécution du dispositif selon l'invention ;
Les figures 2A à 2C sont respectivement une vue en perspective et une vue en élévation de la tige filetée du dispositif illustré en figure 1, et une coupe selon C-C dans un plan orthogonal à l'axe de la tige ;
Les figures 3A à 3C sont respectivement une vue en perspective, une vue de dessous et une coupe selon D-D du coulisseau du dispositif illustré en figure 1 ;
Les figures 4A à 4D sont respectivement une vue en élévation, une coupe selon A-A, une vue de dessus et une coupe selon B-B du cavalier du dispositif illustré en figure 1 ;
La figure 5 est une vue en élévation du dispositif clipsé sur une fourrure, en position déverrouillée,
Les figures 6A et 6B sont des vues en perspective d'un second mode d'exécution du dispositif, en position verrouillée et déverrouillée ;
Les figures 7A à 7E sont respectivement des vues en perspective, en élévation, en vue de dessus et en coupe selon E-E d'un cavalier selon ce second mode d'exécution et une vue agrandie d'un détail C ;
Les figures 8A à 8D sont respectivement des vues en perspective, en vue de dessus et élévation d'un coulisseau selon ce second mode d'exécution et une vue agrandie d'un détail D.

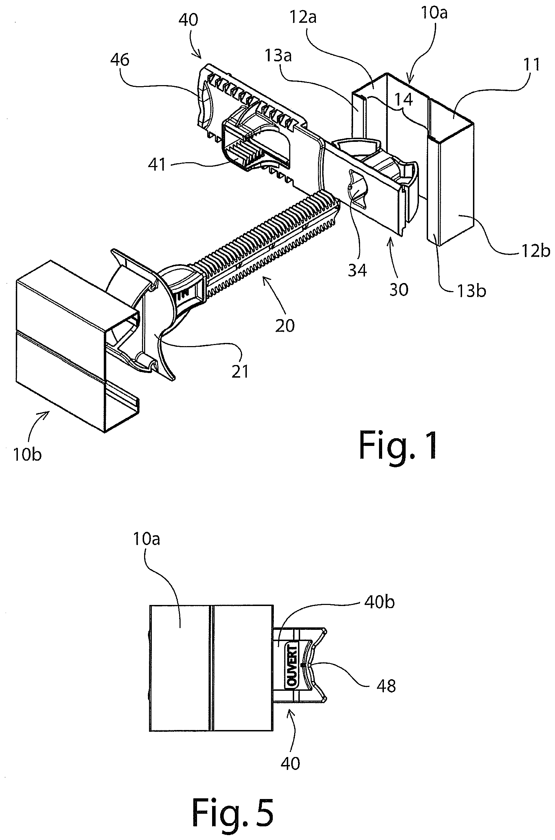

Comme illustré en figure 1, le dispositif selon l'invention comporte, dans un premier mode d'exécution :
- un cavalier 30, destiné à se clipser sur un premier élément profilé 10a, un coulisseau 40 étant monté coulissant sur ce cavalier 30,
- une tige crantée 20 destinée à coopérer avec le cavalier 30 et le coulisseau 40 et comportant à une première extrémité une tête 21 destinée à se clipser sur un second élément profilé 10b.

Les premier et second éléments profilés 10a, 10b, aussi appelés fourrures, sont situés dans des plans sensiblement parallèles mais décalés. Le second élément profilé 10b est fixé à une structure fixe, par exemple un mur, une cloison ou un plafond, et le premier élément profilé 10a est fixé orthogonalement au second élément profilé 10b en vue de recevoir un parement. L'espace entre le mur, la cloison ou le plafond et le parement est destiné à être occupé par un matériau isolant.

Le premier élément profilé 10a est en forme de C comprenant une âme 11 nervurée dans sa partie centrale et bordée de deux ailes parallèles 12a, 12b, qui s'étendent perpendiculairement à l'âme 11 et sont prolongées par deux rebords coplanaires 13a, 13b qui s'étendent l'un vers l'autre en délimitant un passage longitudinal 14. Le second élément profilé 10b est généralement identique.

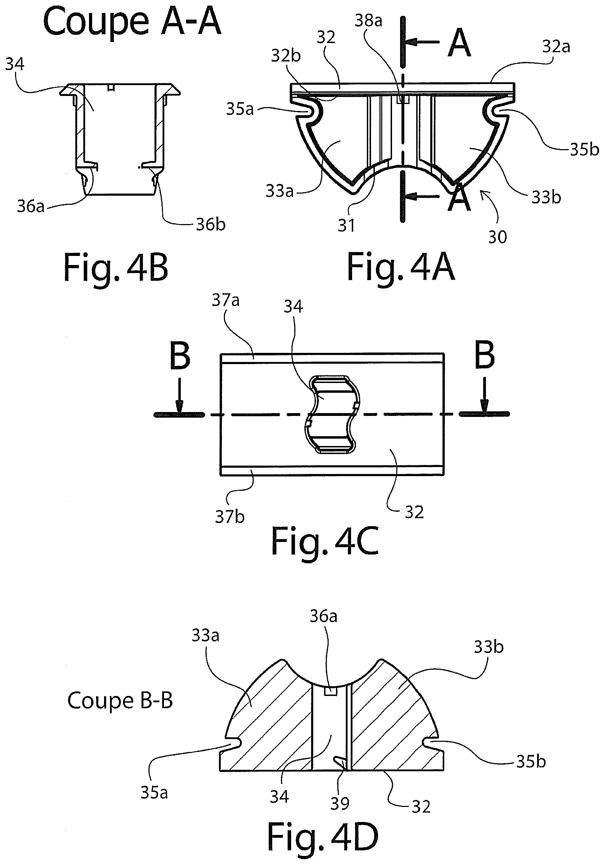

Comme illustré en figures 4A à 4D, le cavalier 30 comprend une embase plane 32 sensiblement rectangulaire comportant une première et une seconde faces 32a, 32b. La première face 32a est lisse. En revanche, à partir de la seconde face 32b de cette embase plane, s'étendent deux ailes latérales 33a, 33b recourbées l'une vers l'autre à partir de petits côtés de l'embase 32. Chacune de ces deux ailes comprend, au voisinage de ladite embase, une gorge 35a, 35b qui s'étend parallèlement auxdits petits côtés, ces deux gorges étant destinées à recevoir les deux rebords coplanaires 13a, 13b d'un élément profilé 10a de section sensiblement en forme de C.

Le cavalier 30 comprend donc :
- un élément tubulaire présentant un profil sensiblement en forme de ω refermé par l'embase plane 32 rectangulaire ; cet élément tubulaire comprend les deux ailes latérales recourbées l'une vers l'autre 33a, 33b,
- des moyens de guidage de la tige crantée 20 sous la forme d'un canal 34 qui s'étend entre ces deux ailes latérales,
- à proximité des petits côtés de l'embase plane 32 et à la base des ailes latérales 33a, 33b, deux gorges latérales opposées 35a, 35b dont les fonds sont écartés l'un de l'autre d'une distance sensiblement égale à la largeur du passage 14.

De cette façon, grâce à l'élasticité des éléments profilés, généralement métalliques, le cavalier 30 peut se clipser sur l'élément profilé 10a, les rebords coplanaires 13a, 13b prenant place respectivement dans les gorges 35a, 35b.

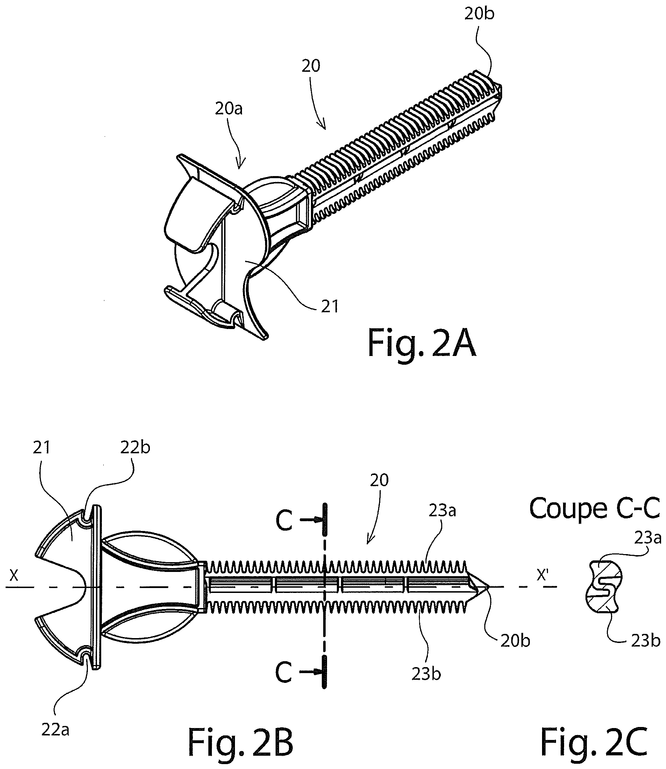

La tige crantée 20 illustrée en figures 2A et 2B comporte à une première extrémité 20a une tête 21 destinée à se clipser sur le second élément profilé 10b fixé au mur. A cet effet, elle comporte des gorges 22a, 22b pour se clipser de la même façon que le cavalier 30 sur ce profilé. La seconde extrémité 20b est pointue, de façon à faciliter l'embrochage du matériau isolant sur la tige une fois celle-ci clipsée sur l'élément profilé 10b.

La tige 20 comporte deux surfaces longitudinales crantées 23a, 23b, les crans étant disposés radialement. La section transversale de la tige a une forme de S, comme illustré en figure 2C, les crans étant situés sur le sommet et la base du S.

Comme illustré en figure 4C, la section transversale du canal 34 du cavalier 30 reproduit cette même forme de S, de sorte que la tige crantée 20 peut coulisser dans cette ouverture sans pivoter, ce qui contribue à garantir la verticalité de l'élément profilé 10a lorsqu'il est approché et clipsé sur le cavalier 30.

Cependant, la section transversale de la tige 20 et du canal 34 pourraient prendre toute autre forme propre à bloquer la tige en rotation dans le canal, pourvu que la tige 20 comporte au moins deux bandes longitudinales crantées, par exemple de forme carrée ou rectangulaire.

Le canal 34 comporte, à proximité de l'embase 32 du cavalier 30, un ergot radial 39 dont le profil est dissymétrique ; cet ergot frotte contre les crans de la tige crantée 20 sans empêcher son coulissement dans le canal 34, mais du fait de son profil dissymétrique, le frottement dans le sens du retrait de la tige 20 est supérieur au frottement dans le sens de l'insertion.

Comme illustré en figure 1, un coulisseau 40 est solidaire en coulissement du cavalier 30. Cependant, comme il sera vu plus loin, pour la clarté du dessin, sur cette figure, le coulisseau 40 prend une position quasi détachée du cavalier 30 qu'il ne peut pas prendre en utilisation.

Le coulisseau 40 comporte une plaque sensiblement rectangulaire et plane, de dimension longitudinale supérieure à celle de l'embase 32 du cavalier et de dimension transversale légèrement supérieure à celle de cette embase. Cette plaque comporte une première face 40a dite face intérieure et une seconde face dite face extérieure 40b. La face intérieure 40a du coulisseau 40 est définie comme celle qui est destinée à être tournée vers le support fixe et le second élément profilé 10b, la face extérieure 40b étant définie comme celle qui est tournée vers le premier élément profilé 10a.

La face intérieure 40a est surmontée d'un fourreau 41 ouvert sur un côté et dont la section transversale présente donc sensiblement la forme d'un U. Cette plaque comporte en outre une ouverture sensiblement rectangulaire 44 partiellement circonscrite par ledit fourreau 41. L'extension transversale de cette ouverture 44 est sensiblement égale ou légèrement supérieure à l'extension transversale de la tige crantée 20, de sorte que la tige crantée peut coulisser entre les bords longitudinaux 43a, 43b non crantés de cette ouverture 44.

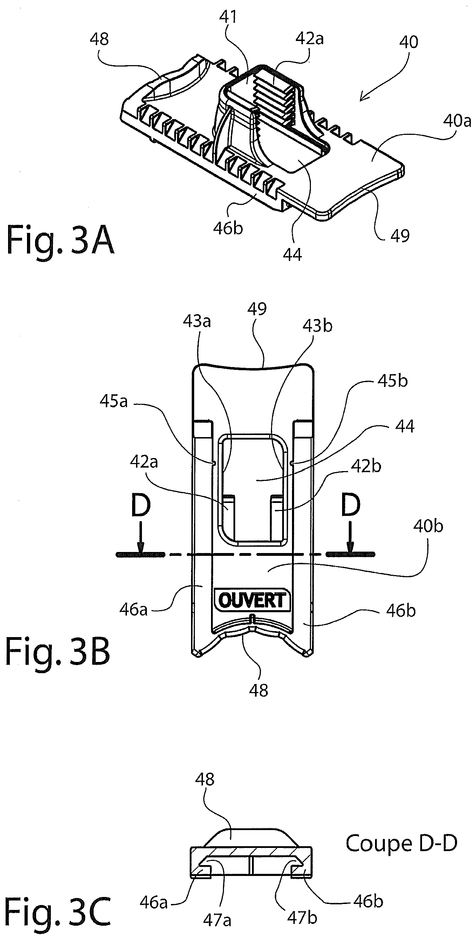

Cependant, les faces internes des parois en regard du fourreau 41 comportent des surfaces crantées 42a, 42b dont les crans viennent en surplomb de l'ouverture 44, réduisant l'espace disponible pour un objet amené à coulisser dans l'ouverture 44, comme illustré en figure 3B. En particulier, la tige crantée 20 ne peut pas coulisser entre ces surfaces crantées 42a, 42b.

Les petits côtés du coulisseau 40 comportent des moyens permettant de faciliter sa prise et sa manipulation par l'utilisateur : une pédale incurvée 48 sur un petit côté de la plaque rectangulaire, et une conformation incurvée du petit côté opposé 49. Le verrouillage s'obtient par action de l'utilisateur sur la pédale 48.

Le coulisseau 40 coulisse et est maintenu sur la première face 32a de l'embase plane 32 du cavalier grâce à des rebords saillants 46a, 46b disposés sur la face extérieure 40b de la plaque du coulisseau et qui s'étendent le long des grands côtés de cette plaque, ces rebords définissant des gorges 47a, 47b. Des bords latéraux formant glissières 37a, 37b qui s'étendent le long des grands côtés de l'embase plane 32 coulissent dans les gorges 47a, 47b. Néanmoins, ce degré de liberté en coulissement est limité grâce :
- d'une part, à des butées 45a, 45b disposées sur les faces en regard des rebords 46a, 46b,
- d'autre part, à des butées latérales 38a, 38b (non visible) disposées de part et d'autre du cavalier 30.

Le débattement du coulisseau 40 est donc limité :
- dans un sens, par la rencontre du cavalier 30 et de la pédale incurvée 48,
- dans l'autre sens, par la rencontre des butées 45a, 45b du coulisseau 40 et des butées 38a, 38b du cavalier 30.

Dans ce mouvement de coulissement, grâce à l'extension longitudinale de l'ouverture 44 du cavalier plus étendue que celle du canal 34 :
- l'embase 32 du cavalier 30 reste intégralement en contact avec la face extérieure 40b du coulisseau 40,
- le canal 34 du cavalier et l'ouverture 44 du coulisseau restent en regard.

Dans une position dite de déverrouillage ou ouverte, le fourreau 41 du coulisseau est écarté de la tige crantée 20 lorsque celle-ci est présente dans le canal 34, elle peut donc coulisser entre les bords longitudinaux 43a, 43b de l'ouverture 44 du coulisseau 40 et coulisse également dans le canal 34 du cavalier. Dans une position dite de verrouillage ou fermée, le fourreau 41 enserre la tige crantée 20, les crans des surfaces crantées 42a, 42b sont en prise avec les crans des surfaces crantées 23a, 23b de la tige crantée, la tige crantée est donc bloquée en coulissement.

Dans la position dite de déverrouillage, la tige crantée 20 peut donc pénétrer et coulisser dans l'ensemble constitué par le cavalier 30 et le coulisseau 40, lorsque cet ensemble est présenté devant la tige. Des moyens sont prévus pour limiter ce mouvement ; il convient en effet que la tige ne ressorte pas du canal 34 à l'opposé de l'embase 32 pour ne pas gêner la mise en place du premier élément profilé 10a sur le cavalier 30. A cet effet, des butées radiales 36a, 36b sont disposées au voisinage de l'ouverture du canal 34 située à l'opposé de l'embase plane 32. La seconde extrémité 20b de la tige crantée vient buter contre ces butées radiales 36a, 36b.

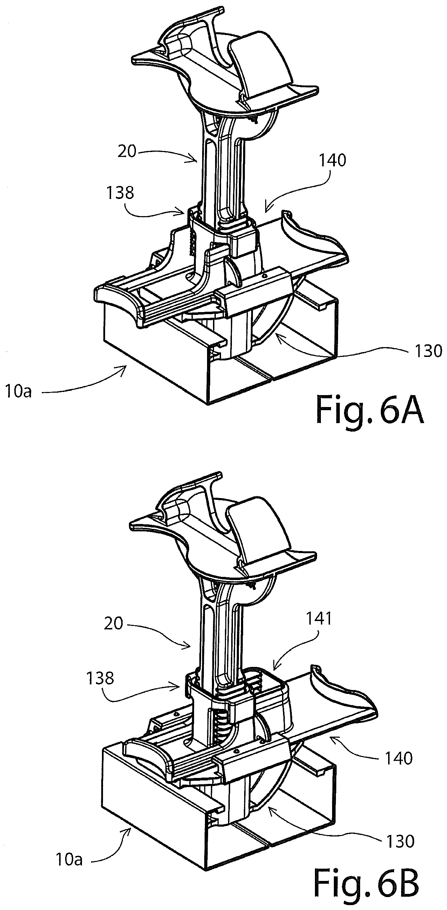

Comme illustré en figures 6A et 6B, le dispositif selon l'invention comporte, dans un second mode d'exécution :
- un cavalier 130, destiné à se clipser sur un premier élément profilé 10a, un coulisseau 140 étant monté coulissant sur ce cavalier 130,
- une tige crantée 20 destinée à coopérer avec le cavalier 130 et son coulisseau 140, identique à celle précédemment décrite.

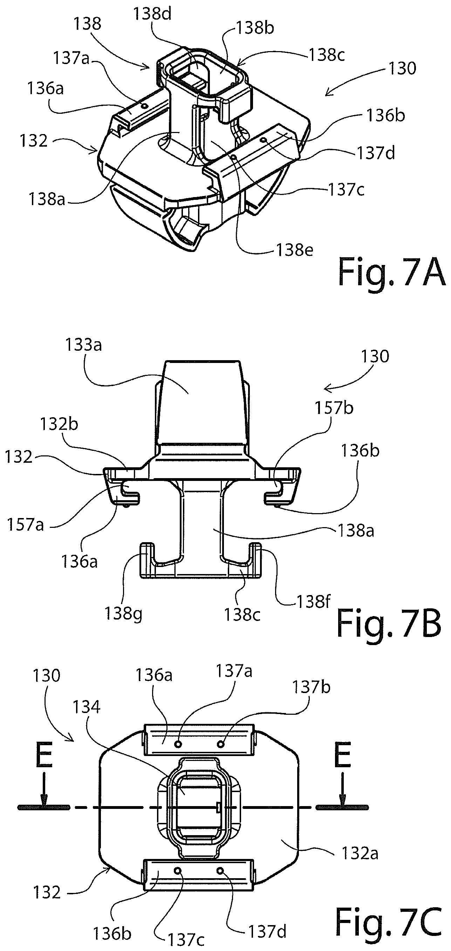

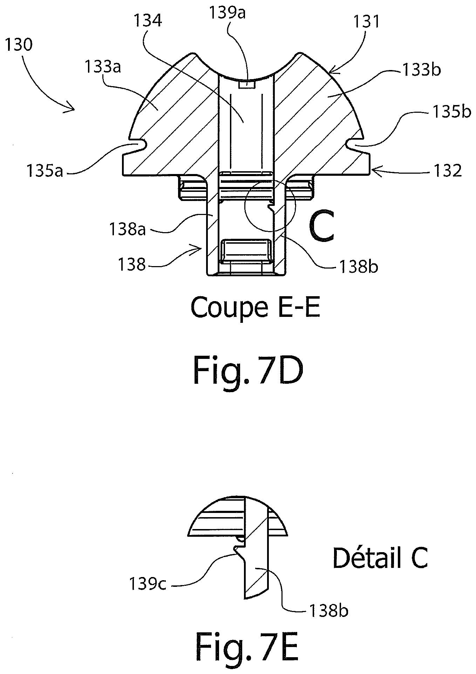

Comme illustré en figures 7A à 7E, le cavalier 130 comprend une embase plane 132 sensiblement octogonale irrégulière comportant une première et une seconde faces 132a, 132b. La première face 132a comporte deux rebords latéraux formant glissières 136a, 136b qui seront décrits plus loin. A partir de la seconde face 132b de cette embase plane, s'étendent deux ailes latérales 133a, 133b recourbées l'une vers l'autre à partir de côtés opposés de l'embase 132. Chacune de ces deux ailes comprend, au voisinage de ladite embase, une gorge 135a, 135b qui s'étend parallèlement auxdits côtés, ces deux gorges étant destinées à recevoir les deux rebords coplanaires 13a, 13b d'un élément profilé 10a de section sensiblement en forme de C.

Le cavalier 130 comprend donc :
- un élément tubulaire présentant un profil sensiblement en forme de ω refermé par l'embase plane 132 ; cet élément tubulaire comprend les deux ailes latérales recourbées l'une vers l'autre 133a, 133b,
- des moyens de guidage de la tige crantée 20 sous la forme d'un canal 134 qui s'étend entre ces deux ailes latérales,
- à proximité de côtés opposés de l'embase plane 132 et à la base des ailes latérales 133a, 133b, deux gorges latérales opposées 135a, 135b dont les fonds sont écartés l'un de l'autre d'une distance sensiblement égale à la largeur du passage 14.

Comme dans le premier mode d'exécution, le cavalier 130 peut se clipser sur l'élément profilé 10a.

Comme dans le premier mode d'exécution, la section transversale de la tige 20 et du canal 134 peuvent prendre toute forme propre à bloquer la tige en rotation dans le canal, pourvu que la tige 20 comporte au moins deux bandes longitudinales crantées, par exemple carrée ou rectangulaire.

Le cavalier 130 du second mode d'exécution se distingue notamment du premier mode d'exécution décrit plus haut en ce que la première face 132a de l'embase 132 n'est pas lisse mais surmontée d'une cheminée 138 qui vient dans le prolongement du canal 134. Cette cheminée est destinée à assurer un meilleur maintien de la tige crantée 20 lorsqu'elle coulisse dans le cavalier 130, c'est à dire dans le canal 134 et dans la cheminée 138.

La cheminée 138 est constituée de deux parois 138a, 138b parallèles et en vis à vis, réunies au sommet par un anneau 138c sensiblement rectangulaire. La cheminée 138 comporte donc deux ouvertures longitudinales 138d, 138e entre les parois 138a, 138b, ces ouvertures étant destinées à laisser le passage aux crans des surfaces crantées 23a, 23b de la tige crantée 20 lorsqu'elle coulisse à l'intérieur de cette cheminée.

De deux côtés opposés de l'anneau 138c s'étendent vers la première face 132a de l'embase 132 deux rebords formant glissières 138f, 138g dans le sens du coulissement.

Un autre élément de distinction est le fait que les rebords formant glissières 136a, 136b, permettant au coulisseau 140 de coulisser sur le cavalier 130, ne sont plus situés sur le coulisseau mais sur la première face 132a de l'embase 132, de part et d'autre de la cheminée 138, en regard respectivement des ouvertures 138d et 138e.

Comme dans le premier mode d'exécution, une paroi 138b de la cheminée 138 comporte, à proximité de l'embase 132 du cavalier 130, un ergot radial 139c dont le profil est dissymétrique et dont la fonction est identique.

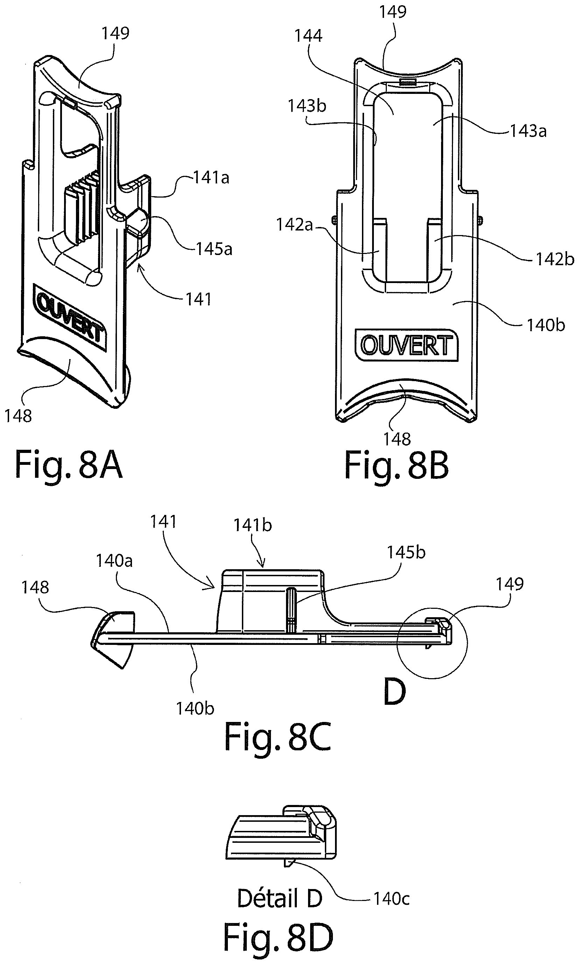

Comme illustré en figure 8A à 8D, un coulisseau 140 est solidaire en coulissement du cavalier 130. Dans ce mode d'exécution, le coulisseau 140 présente une plaque sensiblement rectangulaire et plane, de dimension longitudinale supérieure à celle de l'embase 132 du cavalier et de dimension transversale inférieure à celle de cette embase. Cette plaque comporte une première face 140a dite face intérieure et une seconde face dite face extérieure 140b dont les définitions sont identiques à celles du premier mode d'exécution.

La face intérieure 140a est surmontée sur d'un fourreau 141 ouvert sur un côté et dont la section transversale présente donc la forme d'un U. Cette plaque comporte en outre une ouverture sensiblement rectangulaire 144 partiellement circonscrite par ledit fourreau 141. L'extension transversale de cette ouverture 144 est supérieure à l'extension transversale de la cheminée 138 du cavalier 130, de sorte que la cheminée peut coulisser dans cette ouverture 144 et entre les bords longitudinaux du fourreau 141.

Dans ce mode d'exécution, le coulisseau 140 ne comporte plus de rebord formant glissière sur sa face extérieure 140b, qui est donc lisse, à l'exception d'une butée 140c qui sera décrite plus loin.

Comme dans le premier mode d'exécution, les deux faces en regard du fourreau 141 comportent des surfaces crantées 142a, 142b dont les crans viennent en surplomb de l'ouverture 144, réduisant l'espace disponible pour un objet amené à coulisser dans l'ouverture 144, comme illustré en figure 8B. En particulier, la tige crantée 20 ne peut pas coulisser entre ces surfaces crantées 142a, 142b.

Les petits côtés du coulisseau 140 comportent des moyens permettant de faciliter sa prise et sa manipulation par l'utilisateur : une pédale incurvée 148 sur un petit côté de la plaque rectangulaire, et une conformation incurvée du petit côté opposé 149. Le verrouillage s'obtient par action de l'utilisateur sur la pédale 148.

Le coulisseau 140 coulisse et est maintenu sur la première face 132a de l'embase plane 132 du cavalier grâce à des rebords saillants latéraux 136a, 136b disposés sur l'embase 132 du cavalier 130, ces rebords définissants des gorges 157a, 157b.

Néanmoins, ce degré de liberté en coulissement est limité grâce à une butée 140c saillante à partir de la face extérieure 140b du coulisseau 140, au voisinage du petit côté incurvé 149. Dans le mouvement d'ouverture du coulisseau, cette butée 140c vient au contact de l'embase 132 du cavalier et empêche le coulisseau de s'échapper des gorges 157a, 157b du cavalier.

De plus, le dispositif comporte :
- quatre petites excroissances ou godrons 137a à 137d, disposés deux par deux respectivement sur les faces extérieures des rebords latéraux formant glissières 136a, 136b, parallèles à l'embase 132,
- deux oreilles 145a, 145b disposées sur les flancs et de part et d'autre du fourreau 141, de sorte que le bord rectiligne de ces oreilles glisse sur la face extérieure des rebords latéraux formant glissières 136a, 136b.

Les godrons sont suffisamment petits pour ne pas bloquer le coulissement du coulisseau, mais leur franchissement par le bord rectiligne des oreilles marque à l'utilisateur le passage d'une position ouverte à une position fermée et réciproquement.

Dans le mouvement de coulissement relatif du cavalier et du coulisseau :
- l'embase 132 du cavalier 130 reste intégralement en contact avec la face extérieure 140b du coulisseau 140,
- le canal 134 du cavalier et l'ouverture 144 du coulisseau restent en regard,
- la cheminée 138 du cavalier peut coulisser à l'intérieur du fourreau 141 ; de plus, les bords supérieurs 141a, 141b du fourreau peuvent coulisser le long des rebords formant glissières 138f, 138g de la cheminée.

Dans une position dite de déverrouillage ou ouverte illustrée en figure 6B, le fourreau 141 du coulisseau est écarté de la cheminée 138 et de la tige crantée 20 lorsque celle-ci est présente dans la cheminée ; la tige crantée 20 peut donc coulisser dans la cheminée 138 et entre les bords non crantés 143a, 143b de l'ouverture 144 du coulisseau 140 et coulisse également dans le canal 134 du cavalier. La tige crantée 20 peut donc pénétrer et coulisser dans l'ensemble constitué par le cavalier 130 et le coulisseau 140, lorsque cet ensemble est présenté devant la tige. Des moyens sont prévus pour limiter ce mouvement ; il convient en effet que la tige ne ressorte pas du canal 134 à l'opposé de l'embase 132 pour ne pas gêner la mise en place du premier élément profilé 10a sur le cavalier 130. A cet effet, des butées radiales 139a, 139b (non visible) sont disposées au voisinage de l'ouverture du canal 134 située à l'opposé de l'embase plane 132. La seconde extrémité 20b de la tige crantée vient buter contre ces butées radiales.

Dans une position dite de verrouillage ou fermée illustrée en figure 6A, le fourreau 141 enserre la cheminée 138 et la tige crantée 20. Du fait des ouvertures longitudinales 138d, 138e dans la cheminée 138, les crans de la tige crantée 20 sont saillants par rapport à cette cheminée et les crans des surfaces crantées 142a, 142b du fourreau 141 sont en prise avec les crans des surfaces crantées 23a, 23b de la tige crantée, la tige crantée est donc bloquée en coulissement.

Lorsque le coulisseau 40, 140 est en position de déverrouillage, et bien sûr avant la pose des plaques de parement, une portion de la face extérieure 40b, 140b du coulisseau 40, 140, au voisinage de la pédale 48, 148, s'étend au-delà d'une aile 12a, 12b du premier élément profilé et est donc visible par l'opérateur. A titre d'aide pour l'utilisateur, le mot OUVERT figure sur cette portion, comme illustré en figures 5 et 8A.

Avantageusement, l'ensemble du dispositif peut être réalisé dans un matériau plastique moulé, de préférence renforcé de fibres de verre.

L'invention couvre naturellement d'autres modes d'exécution, par exemple :
- la tige 20 pourrait être filetée et non porter des séries de crans parallèles,
- les crans ou filets de la tige 20 et des surfaces crantées 42a, 42b, 142a, 142b pourraient présenter des sections longitudinales légèrement différentes, de sorte que la mise en prise des crans de la tige et des surfaces crantées pour mettre le dispositif en position de verrouillage nécessite un petit effort de la part de l'utilisateur de façon à maintenir le coulisseau en position verrouillée par frottement ou encliquetage,
- le canal 34, 134 pourrait être fermé au lieu de disposer de butées 36a, 36b, 139a, 139b.

## Revendications

1. Dispositif pour la fixation de panneaux à distance d'une structure support fixe, ce dispositif comprenant :
- une tige crantée (20) dont une première extrémité (20a) comporte des moyens de fixation au moins indirecte à ladite structure, ladite tige crantée comportant deux surfaces crantées longitudinales (23a, 23b) disposées symétriquement par rapport à son axe longitudinal (X-X'),
- un cavalier (30, 130) conformé de manière à venir se clipser sur un élément profilé (10a) de section sensiblement en forme de C, ledit cavalier (30, 130) comportant un canal (34, 134) à l'intérieur desquels la tige crantée peut coulisser,
le dispositif comportant en outre des moyens de verrouillage/déverrouillage montés coulissants par rapport audit cavalier et présentant au moins une surface crantée (42a, 42b, 142a, 142b) disposée de manière à ce que ces moyens de verrouillage/déverrouillage puissent prendre au moins deux positions, une position déverrouillée dans laquelle l'au moins une surface crantée laisse le libre passage de la tige crantée dans le canal (34, 134), et une position verrouillée dans laquelle les crans de l'au moins une surface crantée (42a, 42b, 142a, 142b) des moyens de verrouillage/déverrouillage sont en prise avec les crans de la tige crantée (20), de façon à bloquer le passage de la tige crantée dans les moyens de guidage,
**caractérisé en ce que** les sections transversales de la tige crantée et du canal coopèrent de façon à bloquer la tige en rotation dans le canal.

2. Dispositif selon la revendication 1,
**caractérisé en ce que** les sections transversales de la tige (20) et du canal (34) ont une forme de S, une forme carrée ou une forme rectangulaire.

3. Dispositif selon l'une des revendications 1 ou 2,
**Caractérisé en ce que** les moyens de verrouillage/déverrouillage comprennent un coulisseau (40, 140) mobile en translation sur ledit cavalier (30, 130).

4. Dispositif selon la revendication 3,
**caractérisé en ce que** le coulisseau (40, 140) est monté coulissant par rapport au cavalier (30, 130) dans une direction orthogonale à celle du coulissement de la tige crantée (20) dans le canal (34, 134).

5. Dispositif selon l'une des revendications 3 à 4,
**caractérisé en ce que** le coulisseau (40, 140) comporte deux surfaces crantées (42a, 42b, 142a, 142b) en regard l'une de l'autre.

6. Dispositif selon l'une des revendications 1 à 5,
**caractérisé en ce que** le cavalier (30, 130) comprend deux ailes latérales (33a, 33b, 133a, 133b) recourbées l'une vers l'autre à partir de petits côtés d'une embase plane (32, 132), chacune de ces deux ailes comprenant, au voisinage de ladite embase plane (32, 132), une gorge (35a, 35b, 135a, 135b) qui s'étend parallèlement aux petits côtés, ces deux gorges étant destinées à recevoir les deux rebords coplanaires (13a, 13b) d'un élément profilé (10a) de section sensiblement en forme de C.

7. Dispositif selon la revendication 6,
**caractérisé en ce que** le canal (34, 134) s'étend entre les ailes latérales (33a, 33b, 133a, 133b).

8. Dispositif selon l'une des revendications 1 à 7,
**caractérisé en ce que** le canal (34, 134) comporte au moins une butée (36a, 36b, 139a, 139b) prévue pour limiter le mouvement de coulissement de ladite tige crantée (20) dans le canal.

9. Dispositif selon l'une des revendications 3 à 8,
**caractérisé en ce que** le coulisseau (40) comprend des moyens de guidage et de maintien (46a, 46b, 47a, 47b) du cavalier (30).

10. Dispositif selon la revendication 9,
**caractérisé en ce que** les moyens de guidage et de maintien (46a, 46b) et le cavalier (30) comportent des butées (45a, 45b, 38a) qui coopèrent pour limiter en amplitude le mouvement de coulissement du coulisseau (40).

11. Dispositif selon l'une des revendications 1 à 8,
**caractérisé en ce que** ledit cavalier (130) comprend en outre une cheminée (138) qui s'étend orthogonalement par rapport à l'embase plane (132) et dans le prolongement du canal (134) et à l'intérieur de laquelle la tige crantée (20) peut coulisser.

12. Dispositif selon la revendication 11,
**caractérisé en ce que** le cavalier (130) comprend sur l'embase plane (132) des moyens de guidage et de maintien (136a, 136b, 157a, 157b) du coulisseau (140).

13. Dispositif selon la revendication 12,
**caractérisé en ce que** la cheminée (138) comporte à son extrémité des rebords (138f, 138g) parallèles aux moyens de guidage et de maintien (136a, 136b, 157a, 157b) et formant glissières pour le coulisseau (140).

## Patentansprüche

1. Vorrichtung zum Befestigen von Platten mit einem Abstand von einer festen Konstruktion, wobei die Vorrichtung umfasst:
- eine Zahnstange (20), von welcher ein erstes Ende (20a) Mittel für zumindest eine indirekte Befestigung an der Konstruktion aufweist, wobei die Zahnstange zwei Längszahnflächen (23a, 23b) hat, die in Bezug auf ihrer Längsachse (X-X') symmetrisch angeordnet sind,
- eine Krampe (30, 130), die derart ausgebildet ist, dass diese an ein Profilelement (10a) mit einem im Wesentlichen C-förmigen Querschnitt geklemmt wird, wobei die Krampe (30, 130) einen Kanal (34, 134) aufweist, in welchem die Zahnstange gleiten kann,
wobei die Vorrichtung ferner Verriegelungs-/Entriegelungsmittel aufweist, die bezüglich der Krampe verschiebbar montiert sind und wenigstens eine gezahnte Fläche (42a, 42b, 142a, 142b) aufweisen, die derart angeordnet ist, dass die Verriegelungs-/Entriegelungsmittel zumindest zwei Positionen einnehmen können, nämlich eine entriegelte Position, in der die wenigstens eine gezahnte Fläche den freien Durchgang der Zahnstange in dem Kanal (34, 134) erlaubt, und eine verriegelte Position, in der die Zähne der wenigstens einen gezahnten Fläche (42a, 42b, 142a, 142b) der Verriegelungs-/Entriegelungsmittel mit der Zahnstange (20) derart im Eingriff sind, dass der Durchgang der Zahnstange in der Führungseinrichtung blockiert wird,
**dadurch gekennzeichnet, dass** der Querschnitt der Zahnstange und der Querschnitt des Kanals derart zusammenwirken, dass die Stange gegen eine Drehung in dem Kanal blockiert wird.

2. Vorrichtung nach Anspruch 1,
**dadurch gekennzeichnet, dass** der Querschnitt der Stange (20) und des Kanals (34) S-förmig, viereckig oder rechteckig ist.

3. Vorrichtung nach einem der Ansprüche 1 oder 2,
**dadurch gekennzeichnet, dass** die Verriegelungs-/Entriegelungsmittel einen Schieber (40, 140) umfassen, der an der Krampe (30, 130) verschiebbar ist.

4. Vorrichtung nach Anspruch 3,
**dadurch gekennzeichnet, dass** der Schieber (40, 140) bezüglich der Krampe (30, 130) in einer zur Gleitrichtung der Zahnstange (20) in dem Kanal (34, 134) orthogonalen Richtung verschiebbar montiert ist.

5. Vorrichtung nach einem der Ansprüche 3 bis 4,
**dadurch gekennzeichnet, dass** der Schieber (40, 140) zwei einander gegenüberliegende Zahnflächen (42a, 42b, 142a, 142b) aufweist.

6. Vorrichtung nach einem der Ansprüche 1 bis 5,
**dadurch gekennzeichnet, dass** die Krampe (30, 130) zwei Seitenschenkel (33a, 33b, 133a, 133b) hat, die von den Schmalseiten einer Basisplatte (32, 132) zueinander gekrümmt sind, wobei jeder dieser beiden Schenkel der Basisplatte (32, 132) benachbart eine Nut (35a, 35b, 135a, 135b) aufweist, die sich parallel zu den Schmalseiten erstreckt, wobei diese beiden Nuten zur Aufnahme der beiden koplanaren Flansche (13a, 13b) eines Profilelements (10a) mit im Wesentlichen C-förmigem Querschnitt dienen.

7. Vorrichtung nach Anspruch 6,
**dadurch gekennzeichnet, dass** sich der Kanal (34, 134) zwischen den Seitenschenkeln (33a, 33b, 133a, 133b) erstreckt.

8. Vorrichtung nach einem der Ansprüche 1 bis 7,
**dadurch gekennzeichnet, dass** der Kanal (34, 134) zumindest einen Anschlag (36a, 36b, 139a, 139b) aufweist, der zum Begrenzen der Verschiebebewegung der Zahnstange (20) in dem Kanal vorgesehen ist.

9. Vorrichtung nach einem der Ansprüche 3 bis 8,
**dadurch gekennzeichnet, dass** der Schieber (40) Führungs- und Haltemittel (46a, 46b, 47a, 47b) für die Krampe (30) aufweist.

10. Vorrichtung nach Anspruch 9,
**dadurch gekennzeichnet, dass** die Führungs- und Haltemittel (46a, 46b) und die Krampe (30) Anschläge (45a, 45b, 38a) aufweisen, die zusammenwirken, um das Ausmaß der Verschiebebewegung des Schiebers (40) zu begrenzen.

11. Vorrichtung nach einem der Ansprüche 1 bis 8,
**dadurch gekennzeichnet, dass** die Krampe (130) ferner einen Schacht (138) aufweist, der sich orthogonal zur Basisplatte (132) und in der Verlängerung des Kanals (134) erstreckt und in dem die Zahnstange (20) gleiten kann.

12. Vorrichtung nach Anspruch 11,
**dadurch gekennzeichnet, dass** die Krampe (130) an der Basisplatte (132) Führungs- und Haltemittel (136a, 136b, 157a, 157b) für den Schieber (140) aufweist.

13. Vorrichtung nach Anspruch 12,
**dadurch gekennzeichnet, dass** der Schacht (138) an seinem Ende Flansche (138f, 138g) aufweist, die parallel zu den Führungs- und Haltemitteln (136a, 136b, 157a, 157b) angeordnet sind und Gleitschienen für den Schieber (140) bilden.

## Claims

1. Device for fixing panels at a distance from a fixed support structure, this device comprising:
- a notched rod (20), a first end (20a) of which comprises means for the at least indirect fixing to said structure, said notched rod comprising two longitudinal notched surfaces (23a, 23b) disposed symmetrically with respect to its longitudinal axis (X-X'),
- a link (30, 130) conformed so as to clip onto a profiled element (10a) with a substantially C-shaped cross section, said link (30, 130) comprising a channel (34, 134) inside which the notched rod can slide,
the device further comprising locking/release means mounted so as to slide with respect to said link and having at least one notched surface (42a, 42b, 142a, 142b) disposed so that these locking/release means can adopt at least two positions, a released position in which at least one notched surface leaves free passage for the notched rod in the channel (34, 134), and a locked position in which the notches of the at least one notched surface (42a, 42b, 142a, 142b) of the locking/release means are in engagement with the notches on the notched rod (20), so as to lock the passage of the notched rod in the guide means,
**characterised in that** the cross sections of the notched rod and of the channel cooperate so as to lock the rod with respect to rotation in the channel.

2. Device according to claim 1, **characterised in that** the cross sections of the rod (20) and of the channel (34) have an S shape, a square shape or a rectangular shape.

3. Device according to either claim 1 or claim 2, **characterised in that** the locking/release means comprise a slider (40, 140) able to move in translation on said link (30, 130).

4. Device according to claim 3, **characterised in that** the slider (40, 140) is mounted so as to slide with respect to the link (30, 130) in a direction orthogonal to that of the sliding of the notched rod (20) in the channel (34, 134).

5. Device according to any of claims 3 to 4, **characterised in that** the slider (40, 140) comprises two notched surfaces (42a, 42b, 142a, 142b) facing one another.

6. Device according to any of claims 1 to 5, **characterised in that** the link (30, 130) comprises two lateral flanges (33a, 33b, 133a, 133b) curved towards one another from small sides of a flat base (32, 132), each of these two flanges comprising, in the vicinity of said flat base (32, 132), a groove (35a, 35b, 135a, 135b) that extends parallel to the small sides, these two grooves being intended to receive the two coplanar edges (13a, 13b) of a profiled element (10a) with a substantially C-shaped cross section.

7. Device according to claim 6, **characterised in that** the channel (34, 134) extends between the lateral flanges (33a, 33b, 133a, 133b).

8. Device according to any of claims 1 to 7, **characterised in that** the channel (34, 134) comprises at least one stop (36a, 36b, 139a, 139b) provided for limiting the sliding movement of said notched rod (20) in the channel.

9. Device according to any of claims 3 to 8, **characterised in that** the slider (40) comprises means (46a, 46b, 47a, 47b) for guiding and holding the link (30).

10. Device according to claim 9, **characterised in that** the guiding and holding means (46a, 46b) and the link (30) comprise stops (45a, 45b, 38a) that cooperate in order to limit the amplitude of the sliding movement of the slider (40).

11. Device according to any of claims 1 to 8, **characterised in that** said link (130) further comprises a chimney (138) that extends orthogonally with respect to the flat base (132) and in line with the channel (134), and inside which the notched rod (20) can slide.

12. Device according to claim 11, **characterised in that** the link (130) comprises, on the flat base (132), means (136a, 136b, 157a, 157b) for guiding and holding the slider (140).

13. Device according to claim 12, **characterised in that** the chimney (138) comprises, at its end, edges (138f, 138g) parallel to the guiding and holding means (136a, 136b, 157a, 157b) and forming runners for the slider (140).
